(19) Europäisches Patentamt
European Patent Office
Office européen des brevets

(11) **EP 3 009 968 A1**

(12) **EUROPEAN PATENT APPLICATION**

(43) Date of publication:
**20.04.2016 Bulletin 2016/16**

(51) Int Cl.:
***G06Q 10/06*** *(2012.01)*

(21) Application number: **15189657.8**

(22) Date of filing: **13.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **15.10.2014 IN 2944DE2014**
**12.10.2015 US 201514880482**

(71) Applicant: **Vocollect, Inc.**
**Pittsburgh,**
**Pennsylvania 15235 (US)**

(72) Inventors:
• **RAJ, Mohit**
**Morris Plains, NJ New Jersey 07950 (US)**

• **MITTAL, Saurabh**
**Morris Plains, NJ New Jersey 07950 (US)**
• **HAZRA, Kaushik**
**Morris Plains, NJ New Jersey 07950 (US)**
• **UDUPI, Krishna**
**Morris Plains, NJ New Jersey 07950 (US)**
• **SINGH, Neeraj**
**Morris Plains, NJ New Jersey 07950 (US)**
• **VAISH, Amal**
**Morris Plains, NJ New Jersey 07950 (US)**
• **KUMAR, Amit**
**Morris Plains, NJ New Jersey 07950 (US)**

(74) Representative: **Houghton, Mark Phillip**
**Patent Outsourcing Limited**
**1 King Street**
**Bakewell, Derbyshire DE45 1DZ (GB)**

(54) **SYSTEMS AND METHODS FOR WORKER RESOURCE MANAGEMENT**

(57) A worker resource management system may include a voice-directed mobile terminal that enables a dialog between a user and the voice-directed mobile terminal. At least one computer may be in communication with the mobile terminal. The computer can include a worker resource management module that receives and records user activity from the voice-directed mobile terminal. The worker resource management module can identify user productivity patterns and provide work assessment predictions based at least in part upon the user activity that is received and recorded. Management can make worker resource decisions in response to the user productivity patterns identified or the work assessment predictions provided by the worker resource management module.

FIG. 1

EP 3 009 968 A1

**Description**

CROSS- REFERENCE TO RELATED APPLICATION

The present application claims the benefit of Indian Patent Application No. 2944/DEL/2014 for *SYSTEMS AND METHODS FOR WORKER RESOURCE MANAGEMENT* filed October 15, 2014. The foregoing patent application is hereby incorporated by reference in its entirety.

FIELD

Embodiments of the present invention relate to the field of worker resource management and, more specifically, to worker resource management in a warehouse environment.

BACKGROUND

Wearable, mobile, and/or portable computer terminals are used for a wide variety of tasks. Such terminals allow workers to maintain mobility, while providing the user with desirable computing, data gathering, and data-processing functions. Furthermore, such terminals often provide a communication link to a larger, more centralized computer system.

One example of a particular use environment for a wearable terminal is in connection with a warehouse management system (WMS). A WMS generally involves product distribution and inventory management. One example of a commercial management system is VOCOLLECT VOICE SOLUTIONS™ from Honeywell International, Inc.

An overall integrated management system may utilize a central computer system that runs a program for product tracking/management and for order-filling via shipping. A plurality of mobile terminals may be employed within the system so that workers may communicate with the central system in relation to product handling and other related tasks.

One particularly efficient system is a voice-directed system that utilizes a voice-directed workflow. More specifically, to provide an interface between the central computer system and the workers or other users, such wearable terminals and the central systems to which they are connected are often voice-driven or speech-driven (e.g., operated or controlled at least in part using human speech). A bidirectional communication stream of information (i.e., a dialog) may be exchanged, typically over a wireless network, between the wireless wearable terminals and the central computer system. Information received by each wireless wearable terminal from the central system may be translated from text into voice instructions or commands for the corresponding worker. The mobile terminals and voice-directed work provide a significant efficiency in the performance of the workers' tasks. Specifically, using such terminals, the data-processing work is done virtually hands-free without cumbersome equipment to juggle or paperwork to carry around.

Typically, in order to communicate in a voice-driven system, the worker wears a headset which is communicatively coupled to a wearable or portable terminal. The headset has a microphone for voice data entry and an ear speaker for playing instructions (e.g., voice instructions). Through the headset, the workers are able to receive voice instructions regarding assigned tasks, ask questions, report the progress of tasks, and report working conditions such as inventory shortages.

Therefore, an overall integrated management system generally involves a combination of a central computer system for tracking and management, mobile devices (e.g., wearable terminals), and the users who use and interface with the computer system. Such users may be in the form of workers/operators such as order fillers and pickers (*e.g.,* selection operators picking and placing items), or supervisors that access and monitor the system information. The workers handle the manual aspects of the integrated management system under the command and control of information transmitted from the central computer system to the wireless wearable terminal.

An illustrative example of a set of tasks suitable for a wireless wearable terminal with voice capabilities may involve initially welcoming the worker to the computerized inventory management system and defining a particular task or order, for example, filling a load for a particular delivery vehicle scheduled to depart from a warehouse at a certain specified time. The worker may then answer with a particular area (*e.g.*, "working in freezer area") that he will be working in order to fill that given order. The worker may then be directed to pick items to fill a pallet or bin used for the order.

The system may vocally direct the worker to a particular aisle and bin to pick a particular quantity of an item. The worker may vocally confirm the locations visited, the number of picked items, and/or various other information relating to worker activities. Once the bin or pallet is filled, the system may then direct the worker to a loading dock or bay for a particular truck or other delivery vehicle that will receive that order. As will be appreciated, the specific communications between the wireless wearable terminal and the central computer system for such voice-directed work can be task-specific and highly variable.

In addition to responding to inquiries or confirming the completion of certain tasks, the terminals may also allow the workers to interface with the computer system for other activities such as when they are starting/ending a shift (*i.e.,* logging in or out of the system), and when starting/ending a break activity. For example, in order to indicate the beginning of a break activity the worker may report to the computer system through the headset using standard break vocabulary such as *"take a break"* followed by the type of break the worker wishes to take (*e.g.,* lunch break, coffee break, etc.).

In existing management systems, workers may be checked and monitored by management based upon their performance with regard to multiple parameters. These parameters can include, but are not limited to, the workers' work rate (*i.e.,* the pace at which the worker is performing their assigned tasks) and the workers' break durations. It is difficult in existing systems, however, to ascertain the workers' idle duration around reported break activities (*i.e.,* before and after breaks). Determining worker idle duration around reported break activities is useful information for a supervisor because workers may generally cease or slow work activity before reporting break activities and/or after reporting returning from break activities. Although such worker idleness around break activities may affect the workers' overall work rate, in some cases workers may be able to achieve an acceptable work rate without having attracted attention from the supervisor.

In the described situation where the reported work rate remains at acceptable levels notwithstanding worker idle duration around reported break activities, the management system would not be providing potentially useful information to the supervisor regarding whether the work assigned to the worker is less than his or her capability, or if the workload in general can be increased for all the workers. This adversely affects the warehouse performance in terms of completing the work in a stipulated time period, and can result in problems for warehouse supervisors such as delayed assignments, required overtime, and related expenses causing cost overruns.

In other related situations, a worker may be working in an assigned team of workers for a given task relating to, for example, preparing an order for delivery to a customer. One worker in the group may be trying to slow the pace of the teams' work, and it is difficult to identify or flag this worker in real time. Identification may be possible based upon a periodic work rate report, but by the time the report issues harm has already been done to the warehouse operations (*e.g.,* to the delivery schedules). Existing management systems and methods do not provide an effective way to determine, in real-time, which worker is causing delay.

Notwithstanding the benefits that a warehouse management system can provide, at times there are delays in completing work assignments. Problems in completing a given assignment can have ripple effects to a full shift, and even a whole day's work schedule (or beyond). This affects planning in terms of the resources needed, such as the workers that would be needed to complete the work in the remaining period of time. Also, with delays there may be a requirement for communicating a new estimated time of arrival (ETA) to a customer. Even if a calculation can be done to assess the delay, it becomes critical to monitor the situation going forward.

In some situations, delays may only become visible only towards a shifts' end, or at a periodic situational evaluation by supervisor. It might be too late at this point to take any remedial measures based upon the delay, and even if measures are taken there may be cost overruns in worker overtime or customer dissatisfaction (or both).

There could be other times when the opposite situation occurs in a warehouse environment; *i.e.,* when given work assignments are completed too soon leaving some workers idle for a period of time (*e.g.,* for a two hour period). This may be referred to as a problem of plenty. In this situation, there are resource management problems relating to work assessment, work allocation, work production, etc. In existing systems, however, these situations would not be identified until after the problem has occurred resulting in a loss of man hours which otherwise could have been put to better use.

Another situation which can arise is a combination of the two problems previously identified. A warehouse could be divided among teams working in different regions or there could be an allocation of groups of workers per truck route. While one team may be struggling to finish assigned work towards the end of shift, the other team may have become idle an hour before. In such cases, there is a need for a system which can forewarn the onset of a problematic situation relating to resource management.

As set forth above, while the utilization of voice-directed mobile terminals and management systems tends to improve worker efficiency, existing weaknesses in current systems remain in achieving maximized worker resource allocation. Accordingly, a need exists for management systems and methods that analyze worker productivity based at least in part on worker activity data retrieved from a voice-directed mobile terminal. A need also exists for systems and methods for work assessment predictions based at least in part on worker activity data retrieved from a voice-directed mobile terminal.

SUMMARY

Accordingly, in one aspect, the present invention embraces a worker resource management system including a voice-directed mobile terminal for facilitating a dialog between a user and the voice-directed mobile terminal. The system may include a computer in communication with the voice-directed mobile terminal, the computer including a worker resource analysis module. The worker resource analysis module may be configured to receive user activity information from the voice-directed mobile terminal, and identify user productivity patterns based at least in part upon the user activity information.

In one exemplary embodiment, the system includes a visual display in communication with the computer.

In another exemplary embodiment, the visual display provides reports corresponding to user productivity patterns.

In yet another exemplary embodiment, the visual display provides alerts corresponding to user productivity patterns.

In yet another exemplary embodiment, the worker resource analysis module is configured to classify user activity information into groups including user workflow tasks, user sign-in activity, user sign-out activity, user break activity, and/or user region changes.

In yet another exemplary embodiment, the user productivity patterns include user break duration, user idle time after sign-in, user idle time before sign-off, user idle time before beginning break activity, and/or user idle time after returning from break activity.

In yet another exemplary embodiment, the user productivity patterns are identified at fixed interval time periods immediately preceding the current identification time.

In yet another exemplary embodiment, the user productivity patterns identified are flagged based upon the most recent interval period immediately preceding a current identification time.

In another aspect, the present invention embraces a worker resource management system including a voice-directed mobile terminal for facilitating a dialog between a user and the voice-directed mobile terminal. The system may also include a computer in communication with the voice-directed mobile terminal, the computer including a worker resource analysis module. The worker resource analysis module may be configured to receive user activity information from the voice-directed mobile terminal, and provide work assessment predictions based at least in part upon user activity information received.

In one exemplary embodiment, the system includes a visual display in communication with the computer.

In another exemplary embodiment, the visual display provides reports or alerts corresponding to the work assessment predictions.

In yet another exemplary embodiment, the work assessment predictions include information that more workers are needed in a region.

In yet another exemplary embodiment, the work assessment predictions include information that a delivery vehicle will be delayed beyond scheduled departure time.

In yet another exemplary embodiment, the work assessment predictions are based upon the number of work units remaining in a warehouse region, the number of workers present in a warehouse region's workforce, and/or the rate at which work is being completed in a warehouse region.

In yet another aspect, the present invention embraces a method for managing worker resources including transmitting task data from a server computer to a voice-directed mobile terminal in communication with the server. Speech-based instructions associated with the task data may be provided to a user using the voice-directed mobile terminal. User activity information may be received from the voice-directed mobile terminal. The user activity information may be analyzed to identify user productivity patterns or provide work assessment predictions. Worker resource management decisions may be implemented by management in response to the user activity information analysis.

In one exemplary embodiment, the user productivity patterns include user break duration, user idle time after sign-in, user idle time after sign-off, user idle time before beginning break activity, and/or user idle time after returning from break activity.

In another exemplary embodiment, the worker resource decisions include providing a productivity compliance alert to a worker based upon break duration compliance.

In yet another exemplary embodiment, the worker resource decisions include transferring a worker to a second work region from a first work region.

The foregoing illustrative summary, as well as other exemplary objectives and/or advantages of the invention, and the manner in which the same are accomplished, are further explained within the following detailed description and its accompanying drawings.

BRIEF DESCRIPTION OF THE DRAWINGS

Figure 1 is a perspective view of a worker using an exemplary voice-directed mobile terminal in accordance with one embodiment of a worker resource management system of the present disclosure.

Figure 2 is a block diagram illustrating certain components of an exemplary worker resource management system according to the present disclosure.

Figure 3 is a graphical illustration depicting an exemplary warehouse region divided into time interval segments.

Figure 4 is a graphical illustration depicting time interval segments for an exemplary warehouse region in line format.

DETAILED DESCRIPTION

Embodiments of the present invention embrace systems and methods for worker resource management. The exemplary worker resource systems track and provide supervisors or other management with timely updates, analysis, and predictions relating to workforce management so that problems can be identified and addressed in real-time. Typically, at least a portion of the analyzed data is generated by, or used in connection with, a voice-directed mobile terminal.

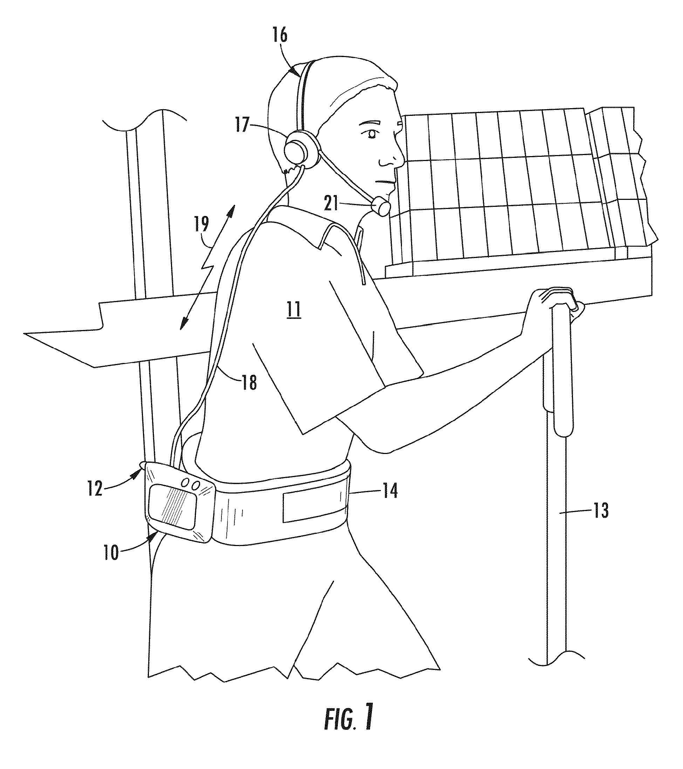

Figure 1 depicts an exemplary voice-directed mobile terminal 10 that may be used with embodiments of the worker resource management system according to the present invention. The voice-directed mobile terminal 10 may be a wearable device, which may be worn by a worker 11 (*e.g.,* on a belt 14 as shown), or by some other user or operator. This allows for hands-free operation. The voice-directed mobile terminal 10 might also be manually carried or otherwise mounted on a piece of equipment such as an industrial vehicle (*e.g.,* a forklift). The worker 11 is shown in Figure 1 operating a pallet jack 13, which is a piece of transportation equipment that may be utilized by a worker in a warehouse environment.

The use of the descriptive term "terminal" is not limiting and may include any similar computer, device, machine, smartphone, smartwatch, indicia reader, combination, or system. Furthermore, the voice-directed mobile terminal may include multiple pieces with separate housings or may be contained in a single housing similar to the embodiment shown in Figure 1. Therefore, the terminal may also include multiple wearable pieces. Alternatively, some or all of the terminal functionality may be incorporated into the headset, which may include all the features required to communicate with a server or external computer. Therefore, the exact form of the voice-directed mobile terminal utilized to practice the present systems and methods is not limited to only the embodiments shown in the drawings.

Although the present application may generally reference "users" that interface with the exemplary systems of the present disclosure, the descriptive term "worker" or "operator" as set forth herein may be more specifically used in reference to workers/operators that perform work on the floor in a manufacturing environment or work on the floor of a warehouse (*e.g.,* fillers, pickers, etc.). Such workers/operators would typically be the users of mobile terminal 10 in connection with the exemplary system. Similarly, other "users" that interface with the exemplary systems may be described using the descriptive term "supervisor." As set forth herein, "supervisor" is generally in reference to a supervisor of workers/operators. The supervisors would generally have access to the graphical interface or display of the exemplary system as described below. The use of the descriptive terms "worker/operator" and "supervisor" in relation to users of the exemplary systems are not limiting and may include any similar member of an organization (staff member, manager, etc.).

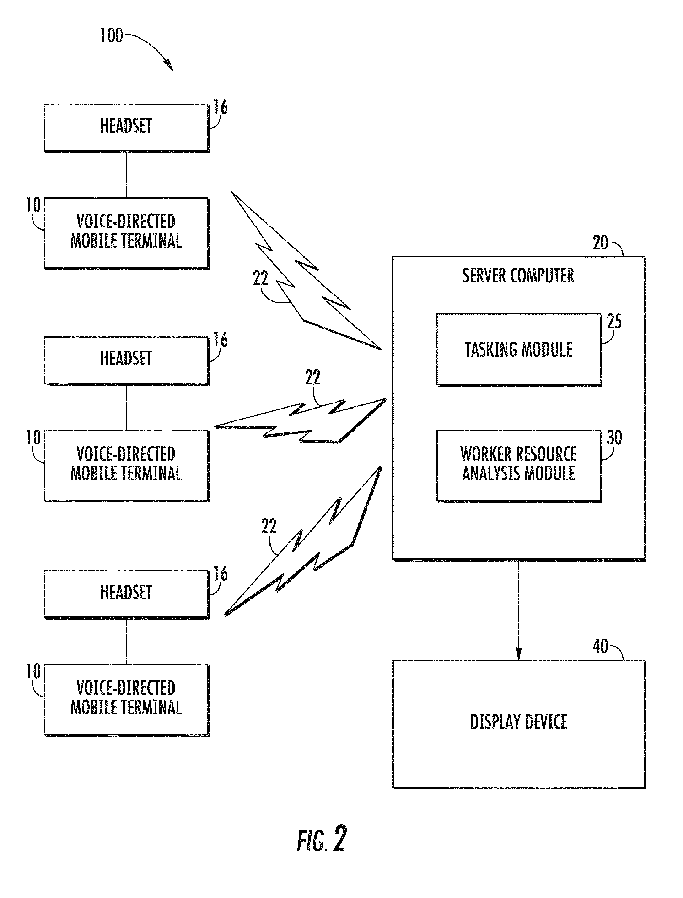

The voice-directed mobile terminal 10 is typically a voice-driven device in that it includes speech interfaces to permit a worker 11 to communicate, using speech or voice, with an external computer such as server computer 20 as illustrated in Figure 2. Typically, the voice-generated mobile terminal's speech interfaces are configured to be capable of permitting multiple different workers to communicate with the server computer as illustrated at Figure 2 (*e.g.,* using speech-recognition technology that recognizes different English dialects, different languages, etc.).

It will be appreciated by a person of ordinary skill in the art that the server computer 20 may be one or, more typically, a plurality of computers having software stored thereon. The server computer 20 may run one or more system software packages for handling/executing a particular task or set of tasks, such as inventory and warehouse management systems (which are available in various commercial forms), or any other systems where multiple tasks are handled by multiple workers. The server computer 20 may be any of a variety of different computers, including both client and server computers working together, and/or databases, and/or systems necessary to interface with multiple voice-directed mobile terminals 10 and associated with multiple different workers, to provide the work tasks that may be related to the products or other items handled in the voice-directed work environment.

The server computer 20 may include a Warehouse Management System (WMS), a database, and a Web application (not explicitly shown). The server computer 20 might also include a computer for programming and managing the individual voice-directed mobile terminals 10. The server computer 20 may be located at one facility or be distributed at geographically distinct facilities. Furthermore, the server computer 20 may include a proxy server. Therefore, the server computer 20 is not limited in scope to a specific configuration.

Alternatively, the voice-directed mobile terminals 10 may be stand-alone devices which interface directly with a worker 11 without a server computer. Therefore, various aspects of the present disclosure might be handled with voice-directed mobile terminals only. Usually, however, to have sufficient database capability to handle large amounts of information, a server computer is desirable.

In an exemplary embodiment, the voice-directed mobile terminal 10 communicates with the server computer 20 using a wireless communication link 22 (Figure 2). The wireless link may be established through an appropriate wireless communication format (e.g., 802.11b/g/n) and may use one or more wireless access points that are coupled to the server computer 20 and accessed by the voice-directed mobile terminal 10. To allow the workers 11 to communicate with the system, one or more peripheral devices, including a headset 16 (*e.g.,* earpiece, earbuds, etc.), are coupled to the voice-directed mobile terminal 10.

The headset 16 may be coupled to the voice-directed mobile terminal 10 through a wired connection such as cord 18 or by a wireless headset connection illustrated in Figure 1 as reference numeral 19 (*e.g.,* using the BLUETOOTH wireless protocol). The headset 16 may be worn on the head of the user/worker 11 and may use a microphone 21 for directing voice responses and activity reports to the voice-directed mobile terminal 10. A headset speaker 17 provides (*e.g.,* plays) voice commands to the worker 11. The voice-directed mobile terminal 10 thus carries on a speech dialog with a worker 11 and provides hands-free operation and voice-directed movement throughout a warehouse or other facility.

It will be appreciated by a person of ordinary skill in the art that, although exemplary embodiments presented herein incorporate voice-direction techniques, the present disclosure is not limited to speech-directed terminals. The present disclosure embraces any terminal that carries on a dialog via speech, text (*e.g.,* through a keyboard), gestures, or other communicative activity, with a worker/operator (or other user).

The server computer 20 includes a tasking module 25 for transmitting specific task data (*e.g.,* picking instructions, training information, scheduling information, or other information associated with a request for a worker to perform some task or provide some information) to the voice-directed mobile terminal 10. Typically, the tasking module 25 is a software module stored on the server computer 20. Alternatively, the tasking module 25 may be a hardware module, or a combination of hardware and software.

The voice-directed mobile terminal 10 may use the task data received from the tasking module 25 to generate audio outputs at the headsets and speakers. For example, text data may be converted using a text-to-speech (TTS) interface to provide voice direction to a worker. Speech input or feedback from a worker is generated at the headset microphone 21 and transmitted to the voice-directed mobile terminal 10 where it is processed by speech recognition circuitry or other speech processing circuitry (*e.g.,* speech recognition software). Any data that is obtained from the voice dialog (*e.g.,* worker speech data) may then be relayed to the server computer 20.

For example, in a worker resource management system 100, the voice-directed mobile terminal 10 receives instructions (*e.g.,* task data) from the tasking module 25 and converts those instructions into an audio transmission (e.g., audio file) to be heard by a worker/operator 11 via a speaker 17. The worker executes the audio instructions and, for example, goes to a designated location and picks a designated product or performs some other task communicated by the audio instructions. The worker 11 then replies into the microphone 21, in a spoken language, such as with a verification of a location and/or a product, and the audio reply is converted to a useable data format (*e.g.,* worker speech data) to be sent back and processed by the server computer 20. That is, in the voice-directed or speech directed work context, the worker 11 maintains a speech dialog (*e.g.,* workflow dialog) with the voice-directed mobile terminal 10 and/or server computer 20 to execute and complete a variety of tasks.

In order to identify worker productivity patterns, all worker 11 dialog interactions through the system 100 may be recorded with a timestamp and maintained by the server computer 10 by a worker resource analysis module 30. Accordingly, the server computer 20 maintains information or data relating the user/worker 11 activity or inactivity. For example, when the operator 11 begins his or her shift, starting from that point until the operator 11 logs out of the system 100 at end of the shift the activities of the worker 11 are recorded.

Activities of the worker 11 that are recorded may be classified by worker resource analysis module 30. Classification types can include, for example, the particular workflow on which worker was working (*e.g.,* selection, replenishment, etc.), sign in, sign out, break, region changes, etc.

Typically, the worker resource analysis module 30 is a software module stored on the server computer 20. Alternatively, the worker resource analysis module 30 may be a hardware module, or a combination of hardware and software.

The worker resource analysis module 30 generates, based at least in part upon an analysis of the worker activity dialog between the voice-directed mobile terminal 10 and the worker 11, productivity data. The productivity data relates to the analysis of information relating to user/worker 11 activity or inactivity.

The productivity information provided by the worker resource analysis module 30 includes determinations relating to idle time around worker sign on/off and worker breaks. In this regard, the worker resource analysis module 30 may calculate the time that elapses between the tasking module 25 assigning work and the information relating to user 11 activities such as sign on, break, and sign off events. All such calculations, except for sign on data, may be based on the 24-hour period preceding the current time that an analysis occurs.

The following information, which could aid the supervisor to take action regarding resource issues, is calculated by the worker resource analysis module 30 from various activities of the worker 11:

- Break duration: The time (e.g., in minutes) between an operator issuing the "take a break" command and returning from break.

- Idle time after signing in: The time (*e.g.*, in minutes) from the operator signing in with his or her password and the first operator activity on an assignment.

- Idle time before signing off: The time (e.g., in minutes) from the last pick (if the assignment is still in progress) or other operator activity on an assignment and the operator issuing the "sign off" command.

- Idle time before break: The time (e.g., in minutes) from the last pick (if the assignment is still in progress) or other operator activity on an assignment and the operator issuing the "take a break" command.

- Idle time after taking break: The time (e.g., in minutes) from the operator issuing the "take a break" command and the first operator activity on an assignment or a pick if the assignment is in progress.

The above noted reports or alerts can be evaluated by the module 30 at fixed time intervals; *i.e.,* running every "X" minutes. Each run could consider the system 100 activity based upon the current time period minus "X" number of minutes. This would ensure that no stale data or past activity creeps into the current productivity report or alert that is provided to the supervisor for addressing a problem.

By way of example, a worker 11 may enter a "take a break" activity at 11:00am. The worker's break activity may extend beyond ten minutes, while the acceptable break duration for evaluation purposes may only be five minutes. System evaluation by the worker resource module 30 may be scheduled to occur at five minute intervals. Thus, when the subsequent evaluation occurs at 11:06am, the worker 11 would be flagged by the system 100 (*e.g.,* the supervisor would be alerted). At the next evaluation of 11:11am, if the worker had not returned from break the worker would remain flagged by the system. Alternatively, if the worker 11 has returned at this time period, the system 100 would assume normalcy and no further action would be assumed. This is possible because only a delta of system activity between 11:06am - 11:11am was considered by the system (*i.e.,* the current time minus "X" number of minutes where X is equal to five minutes in this example).

Exemplary implementation scenarios where workers productivity/idleness patterns can be monitored by the worker resource analysis module 30 are:

- Workers idle time before sign off: *Condition - A worker's last activity is greater than "X" minutes before his or her sign off time.*

- Workers taking longer breaks: *Condition - Workers are taking breaks longer than "X" minutes.*

- Workers idle time before break: *Condition - A worker's last activity is more than "X" minutes before the start of his or her break time.*

- Workers idle time after break: *Condition - A worker's next activity is more than "X" minutes after the end of his or her break time.*

- Workers idle time after break: *Condition - An operator's next activity is more than "X" minutes after the end of his or her break time.*

With repeated evaluations, the most recent deflection can be flagged by the system. The frequency of evaluation period could be set proportional to how critical the monitored situation activity is.

The productivity data generated by the worker resource analysis module 30 may be viewed by a workforce supervisor overseeing, for example, the performance of picking operators on a warehouse floor, on a display device 40 (*e.g.,* LCD monitor) that is in communication with the server computer 20. The communication will typically be wireless communication using a wireless method of communication method (*e.g.,* SMS or text messaging, electronic mail, etc.). The workflow management system 100 may display the productivity data in raw form or in a compiled form (*e.g.,* a summary report). In this regard, a supervisor may be provided with information regarding the productivity of the workforce (*e.g.,* selection operators working a warehouse floor), a selected subgroup of the workforce, or an individual member of the workforce. In this way, the exemplary worker resource management system 100 according to the present disclosure can provide timely information relating to worker productivity.

Typically, the worker resource management system 100 is configured to receive and display at least a portion of the productivity data in real time, thereby allowing the workforce manager to take immediate corrective action to remedy the reported problem.

A supervisor may utilize the relevant productivity information to, for example, manage operator downtime and break compliance with productivity alerts; use these alerts and various charted data to determine the cause of missed goal rates or work schedules; and/or to make informed management decisions and personnel actions at the right time instead of waiting for shift end reports to identify anomalies in work patterns.

In another exemplary embodiment, worker resource management system 100 can track and compare worker task and activity progress across multiple warehouse regions at given points or intervals of time. For example, worker resource analysis module 30 of system 100 can provide information relating to whether an assigned group/team of workers 11 (e.g., Team 1) assigned work in one warehouse region (e.g., Region 1) is performing at a faster rate than a team of workers 11 (*e.g.,* Team 2) in another region (*e.g.,* Region 2) such that the workers 11 of Team 1 will be completing their selected tasks a certain time period (e.g., "X" number of minutes) before the workers 11 of Team 2 will complete their assigned tasks. In this regard, the worker resource analysis module 30 of system 100 can forewarn supervisors regarding the onset of problematic situations with worker resource management reporting and allow the supervisor to take appropriate corrective action. For example, the system 100 can report (*e.g.,* via display device 40) if the team of workers 11 working in an exemplary Region 1 is performing better/faster than the workers 11 in Region 2 such that Region 1 work will be completed at a certain time (*i.e.,* "X" minutes) before Region 2 work, which would therefore yield an excess of workers 11 in Region 1.

Some features of the exemplary system 100 include the capability to predict workforce shortages as well as surplus, real-time alerts/reports in response to changes, the ability to integrate with third-party applications, and the ability to monitor/manage the whole of warehouse operations.

The worker resource analysis module 30 of the exemplary system 100 may generally use the following information in generating reports/alerts: the work units remaining in a given warehouse region, the current number of workers present in a region's workforce, the current time for assigned work completion in a region, and/or the rate at which work is being completed in a given region (*e.g.,* in units/hour). The exemplary system 100 can observe the described metrics in real-time and provide timely updates to supervisors relating to workload.

In one example for a specific use environment, the system 100 can analyze worker 11 activities/tasks in order to predict when workers 11 will finish picking tasks in a warehouse for items relating to a given delivery route such that the route then can depart for delivery. The worker's loading activities and time may be taken into account for more accurate predictions relating to delivery vehicle loading completion and subsequent delivery vehicle departure.

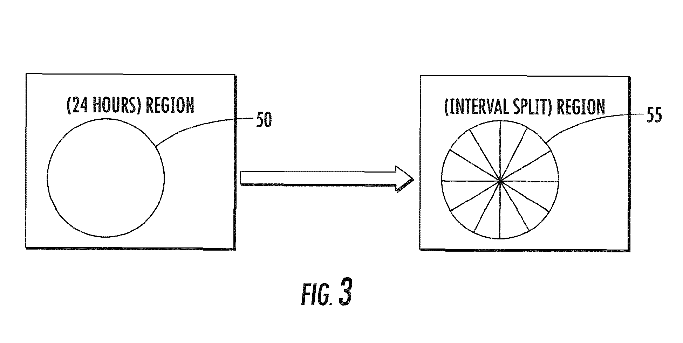

In order for the worker resource analysis module 30 of the system 100 to compare worker 11 task progress across multiple warehouse regions or across multiple vehicle loading projects at certain given points of time, warehouse operational hours can be divided into finite intervals or periods of time (*i.e.,* chunks of time). For example, Figure 3 illustrates an exemplary warehouse region as a 24-hour time period 50, and then further divides the region into segments of equal, two-hour time intervals 55.

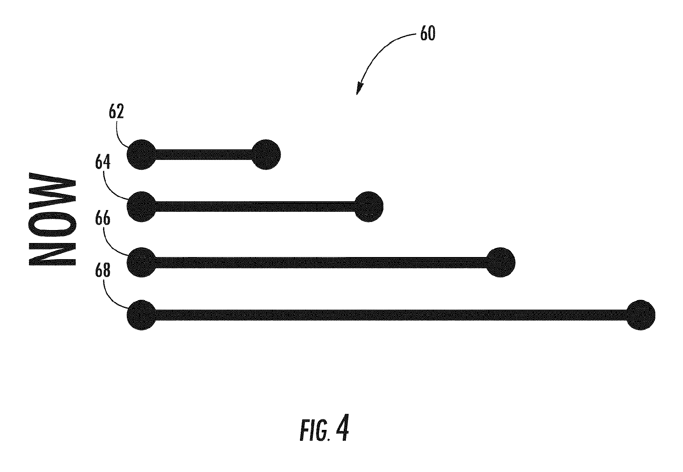

Figure 4 illustrates the time intervals 60 in line format stretching into the future from present time, which is designated as "Now." For example, if the current time (*i.e.,* Now) is 1:00pm, the next two-hour interval 62 runs to 3:00pm; the next four-hour interval 64 runs to 5:00pm; the next six-hour interval 66 runs to 7:00pm; and the next eight-hour interval 68 runs to 9:00pm. With intervals 60 established, worker resource analysis requiring a time window may then be considered.

In the item/product loading context for a delivery vehicle, workload for a given workforce region/route can be identified based upon the tasking module 25 assignment of the quantity of items to be picked by a worker 11 for the assignments that have a route delivery/departure falling within the given time intervals 60. The workload calculation for a subsequent interval (*e.g.,* subsequent interval 64) will be inclusive of the workload of the previous interval (*e.g.,* interval 62). For example, if interval 62 has workload of ten work units, interval 64 will have a workload of ten units plus the additional workload units that are included beyond the duration of interval 62.

The operators/workers 11 that are needed for a given region/route can be determined from the worker 11 activity recorded by the server computer 20 based upon factors including the quantity of items to be picked for the respective interval period, the actual rate at which items are being picked by workers 11, and the number of currently active/signed in operators 11.

Table 1 (below) is an exemplary operator requirement table noting the operators required for a given workload per exemplary regions (1-3) based upon departure intervals falling within the given intervals. For example, in the "Next" columns for Region 1 worker excess or shortage is listed respectively as -8, -8, 2, 11, and 24. This reveals an excess of eight operators until the "Next 06-hrs" interval when, due to the number of vehicles scheduled for departure, the work to be completed rises such that in addition to the eight operators, Region 1 now requires two additional workers to fulfill the Region's workload requirements.

Table 1

| Region Number | Operators Working | Next 02-hrs | Next 04-hrs | Next 06-hrs | Next 08-hrs | Next 10-hrs |
|---|---|---|---|---|---|---|
| 1 | 8 | -8 | -8 | 2 | 11 | 24 |
| 2 | 8 | -8 | -8 | 6 | 18 | 34 |
| 3 | 9 | -9 | -9 | 3 | 13 | 27 |

In order for the worker resource management system 100 to issue advance reports or alerts regarding the onset of potentially problematic situations with worker resource management, a number of factors are taken into account by the worker productivity analysis module 30. This includes the amount of work remaining (*e.g.,* reported in workload units), the current number of workers 11 in the workforce (*e.g.,* the number of users currently signed-in), the current projected time of work completion, and the current rate of work being accomplished (e.g., calculated in work-units/hour). These factors provide a basis for calculating the current demand for resources (*e.g.,* time, workers, etc.). Certain exemplary factors/calculations that may be determined/reported through the worker resource analysis module 30 are set forth as follows:

- Projected departure date:

$$Calculation = (Work\ Remaining) \div (Work\ Rate \times Operators\ Required) + Current\ Time.$$

- Projected departure delay: The time difference (*e.g.,* in minutes) from expected departure date/time and the projected departure date/time of the delivery vehicle carrying the assignment or route items.

$$Calculation = Expected\ Departure - Projected\ Departure.$$

- Operators required (REQ): The number of operators that are needed to work on a route or region to complete the route by the expected departure date and time.

$$Calculation: REQ = Workload \div (Work\ Rate).$$

- Workload: The total number of items remaining to process during the chosen interval (*e.g.,* expressed in items-per-minute for the items remaining for all assignments in the route).

- Work Rate: number of items processed per minute (the average processing rate of active operators, or the region goal rate if there are no active operators).

Based on the given factors/calculations, the worker resource analysis module 30 can provide useful reports or alerts to supervisors. For example, reports/alerts may be provided to a supervisor indicating that "X" number of additional workers are needed in a region, that "X" number of workers are surplus in a region, that delivery departure in a region would be delayed by "X" minutes/hours beyond current scheduled departure time, that delivery departure time for a region would be ready "X" minutes/hours before the current scheduled departure time, and/or that the work assigned in a given region would be complete after "X" hours.

Providing the noted reports or alerts to supervisors well enough in advance would give supervisors time to make appropriate worker resource adjustments and avoid worker resource management problems. To counter adverse situations, steps could be taken including transferring "X" number of workers to a region where workers are currently needed from a region where there is a surplus, transferring "X" number of workers from a region where there is a surplus to region where workers are needed, transferring "X" number of workers to the trucks/routes which are most recently scheduled for departures followed by a transfer to the trucks/routes scheduled to depart next, etc.

The worker resource analysis module 30 of the exemplary system 100 therefore provides reports/alerts that improve warehouse management as respective regions/routes can be managed for completion at almost the same time. The exemplary system 100 also provides for less disparity in work completion percentage, allows delivery vehicles to depart at a known/scheduled time, allows workforce and other resources to be more effectively utilized, and allows for greater work progress given that worker re-allocation can be monitored in real time.

Although exemplary embodiments of the present disclosure relate to a warehouse setting, it will be appreciated by a person of ordinary skill in the art that the present disclosure embraces systems and methods that may be used in connection with other environments. For example, and without intending to limit the present disclosure, the systems and methods according to the present disclosure may be used in a retail store setting, a pharmacy setting, or a transport vehicle. The term warehouse, therefore, is used in its broadest sense and is not intended to limit the application of the disclosure to a particular physical environment.

It will be appreciated that the present disclosure additionally embraces methods associated with the embodiments of the systems according to the present disclosure.

To supplement the present disclosure, this application incorporates entirely by reference the following patents, patent application publications, and patent applications:

U.S. Patent No. 6,832,725; U.S. Patent No. 7,128,266;
U.S. Patent No. 7,159,783; U.S. Patent No. 7,413,127;
U.S. Patent No. 7,726,575; U.S. Patent No. 8,294,969;
U.S. Patent No. 8,317,105; U.S. Patent No. 8,322,622;
U.S. Patent No. 8,366,005; U.S. Patent No. 8,371,507;
U.S. Patent No. 8,376,233; U.S. Patent No. 8,381,979;
U.S. Patent No. 8,390,909; U.S. Patent No. 8,408,464;
U.S. Patent No. 8,408,468; U.S. Patent No. 8,408,469;
U.S. Patent No. 8,424,768; U.S. Patent No. 8,448,863;
U.S. Patent No. 8,457,013; U.S. Patent No. 8,459,557;
U.S. Patent No. 8,469,272; U.S. Patent No. 8,474,712;
U.S. Patent No. 8,479,992; U.S. Patent No. 8,490,877;
U.S. Patent No. 8,517,271; U.S. Patent No. 8,523,076;
U.S. Patent No. 8,528,818; U.S. Patent No. 8,544,737;
U.S. Patent No. 8,548,242; U.S. Patent No. 8,548,420;
U.S. Patent No. 8,550,335; U.S. Patent No. 8,550,354;
U.S. Patent No. 8,550,357; U.S. Patent No. 8,556,174;
U.S. Patent No. 8,556,176; U.S. Patent No. 8,556,177;
U.S. Patent No. 8,559,767; U.S. Patent No. 8,599,957;
U.S. Patent No. 8,561,895; U.S. Patent No. 8,561,903;
U.S. Patent No. 8,561,905; U.S. Patent No. 8,565,107;
U.S. Patent No. 8,571,307; U.S. Patent No. 8,579,200;
U.S. Patent No. 8,583,924; U.S. Patent No. 8,584,945;
U.S. Patent No. 8,587,595; U.S. Patent No. 8,587,697;
U.S. Patent No. 8,588,869; U.S. Patent No. 8,590,789;
U.S. Patent No. 8,596,539; U.S. Patent No. 8,596,542;
U.S. Patent No. 8,596,543; U.S. Patent No. 8,599,271;
U.S. Patent No. 8,599,957; U.S. Patent No. 8,600,158;
U.S. Patent No. 8,600,167; U.S. Patent No. 8,602,309;
U.S. Patent No. 8,608,053; U.S. Patent No. 8,608,071;
U.S. Patent No. 8,611,309; U.S. Patent No. 8,615,487;
U.S. Patent No. 8,616,454; U.S. Patent No. 8,621,123;
U.S. Patent No. 8,622,303; U.S. Patent No. 8,628,013;
U.S. Patent No. 8,628,015; U.S. Patent No. 8,628,016;
U.S. Patent No. 8,629,926; U.S. Patent No. 8,630,491;
U.S. Patent No. 8,635,309; U.S. Patent No. 8,636,200;
U.S. Patent No. 8,636,212; U.S. Patent No. 8,636,215;
U.S. Patent No. 8,636,224; U.S. Patent No. 8,638,806;
U.S. Patent No. 8,640,958; U.S. Patent No. 8,640,960;
U.S. Patent No. 8,643,717; U.S. Patent No. 8,646,692;
U.S. Patent No. 8,646,694; U.S. Patent No. 8,657,200;
U.S. Patent No. 8,659,397; U.S. Patent No. 8,668,149;
U.S. Patent No. 8,678,285; U.S. Patent No. 8,678,286;

U.S. Patent No. 8,682,077; U.S. Patent No. 8,687,282;
U.S. Patent No. 8,692,927; U.S. Patent No. 8,695,880;
U.S. Patent No. 8,698,949; U.S. Patent No. 8,717,494;
U.S. Patent No. 8,717,494; U.S. Patent No. 8,720,783;
U.S. Patent No. 8,723,804; U.S. Patent No. 8,723,904;
U.S. Patent No. 8,727,223; U.S. Patent No. D702,237;
U.S. Patent No. 8,740,082; U.S. Patent No. 8,740,085;
U.S. Patent No. 8,746,563; U.S. Patent No. 8,750,445;
U.S. Patent No. 8,752,766; U.S. Patent No. 8,756,059;
U.S. Patent No. 8,757,495; U.S. Patent No. 8,760,563;
U.S. Patent No. 8,763,909; U.S. Patent No. 8,777,108;
U.S. Patent No. 8,777,109; U.S. Patent No. 8,779,898;
U.S. Patent No. 8,781,520; U.S. Patent No. 8,783,573;
U.S. Patent No. 8,789,757; U.S. Patent No. 8,789,758;
U.S. Patent No. 8,789,759; U.S. Patent No. 8,794,520;
U.S. Patent No. 8,794,522; U.S. Patent No. 8,794,525;
U.S. Patent No. 8,794,526; U.S. Patent No. 8,798,367;
U.S. Patent No. 8,807,431; U.S. Patent No. 8,807,432;
U.S. Patent No. 8,820,630; U.S. Patent No. 8,822,848;
U.S. Patent No. 8,824,692; U.S. Patent No. 8,824,696;
U.S. Patent No. 8,842,849; U.S. Patent No. 8,844,822;
U.S. Patent No. 8,844,823; U.S. Patent No. 8,849,019;
U.S. Patent No. 8,851,383; U.S. Patent No. 8,854,633;
U.S. Patent No. 8,866,963; U.S. Patent No. 8,868,421;
U.S. Patent No. 8,868,519; U.S. Patent No. 8,868,802;
U.S. Patent No. 8,868,803; U.S. Patent No. 8,870,074;
U.S. Patent No. 8,879,639; U.S. Patent No. 8,880,426;
U.S. Patent No. 8,881,983; U.S. Patent No. 8,881,987;
U.S. Patent No. 8,903,172; U.S. Patent No. 8,908,995;
U.S. Patent No. 8,910,870; U.S. Patent No. 8,910,875;
U.S. Patent No. 8,914,290; U.S. Patent No. 8,914,788;
U.S. Patent No. 8,915,439; U.S. Patent No. 8,915,444;
U.S. Patent No. 8,916,789; U.S. Patent No. 8,918,250;
U.S. Patent No. 8,918,564; U.S. Patent No. 8,925,818;
U.S. Patent No. 8,939,374; U.S. Patent No. 8,942,480;
U.S. Patent No. 8,944,313; U.S. Patent No. 8,944,327;
U.S. Patent No. 8,944,332; U.S. Patent No. 8,950,678;
U.S. Patent No. 8,967,468; U.S. Patent No. 8,971,346;
U.S. Patent No. 8,976,030; U.S. Patent No. 8,976,368;
U.S. Patent No. 8,978,981; U.S. Patent No. 8,978,983;
U.S. Patent No. 8,978,984; U.S. Patent No. 8,985,456;
U.S. Patent No. 8,985,457; U.S. Patent No. 8,985,459;
U.S. Patent No. 8,985,461; U.S. Patent No. 8,988,578;
U.S. Patent No. 8,988,590; U.S. Patent No. 8,991,704;
U.S. Patent No. 8,996,194; U.S. Patent No. 8,996,384;
U.S. Patent No. 9,002,641; U.S. Patent No. 9,007,368;
U.S. Patent No. 9,010,641; U.S. Patent No. 9,015,513;
U.S. Patent No. 9,016,576; U.S. Patent No. 9,022,288;
U.S. Patent No. 9,030,964; U.S. Patent No. 9,033,240;
U.S. Patent No. 9,033,242; U.S. Patent No. 9,036,054;
U.S. Patent No. 9,037,344; U.S. Patent No. 9,038,911;
U.S. Patent No. 9,038,915; U.S. Patent No. 9,047,098;
U.S. Patent No. 9,047,359; U.S. Patent No. 9,047,420;
U.S. Patent No. 9,047,525; U.S. Patent No. 9,047,531;
U.S. Patent No. 9,053,055; U.S. Patent No. 9,053,378;
U.S. Patent No. 9,053,380; U.S. Patent No. 9,058,526;
U.S. Patent No. 9,064,165; U.S. Patent No. 9,064,167;
U.S. Patent No. 9,064,168; U.S. Patent No. 9,064,254;

U.S. Patent No. 9,066,032; U.S. Patent No. 9,070,032;
U.S. Design Patent No. D716,285;
U.S. Design Patent No. D723,560;
U.S. Design Patent No. D730,357;
U.S. Design Patent No. D730,901;
U.S. Design Patent No. D730,902;
U.S. Design Patent No. D733,112;
U.S. Design Patent No. D734,339;
International Publication No. 2013/163789;
International Publication No. 2013/173985;
International Publication No. 2014/019130;
International Publication No. 2014/110495;
U.S. Patent Application Publication No. 2008/0185432;
U.S. Patent Application Publication No. 2009/0134221;
U.S. Patent Application Publication No. 2010/0177080;
U.S. Patent Application Publication No. 2010/0177076;
U.S. Patent Application Publication No. 2010/0177707;
U.S. Patent Application Publication No. 2010/0177749;
U.S. Patent Application Publication No. 2010/0265880;
U.S. Patent Application Publication No. 2011/0202554;
U.S. Patent Application Publication No. 2012/0111946;
U.S. Patent Application Publication No. 2012/0168511;
U.S. Patent Application Publication No. 2012/0168512;
U.S. Patent Application Publication No. 2012/0193423;
U.S. Patent Application Publication No. 2012/0203647;
U.S. Patent Application Publication No. 2012/0223141;
U.S. Patent Application Publication No. 2012/0228382;
U.S. Patent Application Publication No. 2012/0248188;
U.S. Patent Application Publication No. 2013/0043312;
U.S. Patent Application Publication No. 2013/0082104;
U.S. Patent Application Publication No. 2013/0175341;
U.S. Patent Application Publication No. 2013/0175343;
U.S. Patent Application Publication No. 2013/0257744;
U.S. Patent Application Publication No. 2013/0257759;
U.S. Patent Application Publication No. 2013/0270346;
U.S. Patent Application Publication No. 2013/0287258;
U.S. Patent Application Publication No. 2013/0292475;
U.S. Patent Application Publication No. 2013/0292477;
U.S. Patent Application Publication No. 2013/0293539;
U.S. Patent Application Publication No. 2013/0293540;
U.S. Patent Application Publication No. 2013/0306728;
U.S. Patent Application Publication No. 2013/0306731;
U.S. Patent Application Publication No. 2013/0307964;
U.S. Patent Application Publication No. 2013/0308625;
U.S. Patent Application Publication No. 2013/0313324;
U.S. Patent Application Publication No. 2013/0313325;
U.S. Patent Application Publication No. 2013/0342717;
U.S. Patent Application Publication No. 2014/0001267;
U.S. Patent Application Publication No. 2014/0008439;
U.S. Patent Application Publication No. 2014/0025584;
U.S. Patent Application Publication No. 2014/0034734;
U.S. Patent Application Publication No. 2014/0036848;
U.S. Patent Application Publication No. 2014/0039693;
U.S. Patent Application Publication No. 2014/0042814;
U.S. Patent Application Publication No. 2014/0049120;
U.S. Patent Application Publication No. 2014/0049635;
U.S. Patent Application Publication No. 2014/0061306;
U.S. Patent Application Publication No. 2014/0063289;

U.S. Patent Application Publication No. 2014/0066136;
U.S. Patent Application Publication No. 2014/0067692;
U.S. Patent Application Publication No. 2014/0070005;
U.S. Patent Application Publication No. 2014/0071840;
U.S. Patent Application Publication No. 2014/0074746;
U.S. Patent Application Publication No. 2014/0076974;
U.S. Patent Application Publication No. 2014/0078341;
U.S. Patent Application Publication No. 2014/0078345;
U.S. Patent Application Publication No. 2014/0097249;
U.S. Patent Application Publication No. 2014/0098792;
U.S. Patent Application Publication No. 2014/0100813;
U.S. Patent Application Publication No. 2014/0103115;
U.S. Patent Application Publication No. 2014/0104413;
U.S. Patent Application Publication No. 2014/0104414;
U.S. Patent Application Publication No. 2014/0104416;
U.S. Patent Application Publication No. 2014/0104451;
U.S. Patent Application Publication No. 2014/0106594;
U.S. Patent Application Publication No. 2014/0106725;
U.S. Patent Application Publication No. 2014/0108010;
U.S. Patent Application Publication No. 2014/0108402;
U.S. Patent Application Publication No. 2014/0110485;
U.S. Patent Application Publication No. 2014/0114530;
U.S. Patent Application Publication No. 2014/0124577;
U.S. Patent Application Publication No. 2014/0124579;
U.S. Patent Application Publication No. 2014/0125842;
U.S. Patent Application Publication No. 2014/0125853;
U.S. Patent Application Publication No. 2014/0125999;
U.S. Patent Application Publication No. 2014/0129378;
U.S. Patent Application Publication No. 2014/0131438;
U.S. Patent Application Publication No. 2014/0131441;
U.S. Patent Application Publication No. 2014/0131443;
U.S. Patent Application Publication No. 2014/0131444;
U.S. Patent Application Publication No. 2014/0131445;
U.S. Patent Application Publication No. 2014/0131448;
U.S. Patent Application Publication No. 2014/0133379;
U.S. Patent Application Publication No. 2014/0136208;
U.S. Patent Application Publication No. 2014/0140585;
U.S. Patent Application Publication No. 2014/0151453;
U.S. Patent Application Publication No. 2014/0152882;
U.S. Patent Application Publication No. 2014/0158770;
U.S. Patent Application Publication No. 2014/0159869;
U.S. Patent Application Publication No. 2014/0166755;
U.S. Patent Application Publication No. 2014/0166759;
U.S. Patent Application Publication No. 2014/0168787;
U.S. Patent Application Publication No. 2014/0175165;
U.S. Patent Application Publication No. 2014/0175172;
U.S. Patent Application Publication No. 2014/0191644;
U.S. Patent Application Publication No. 2014/0191913;
U.S. Patent Application Publication No. 2014/0197238;
U.S. Patent Application Publication No. 2014/0197239;
U.S. Patent Application Publication No. 2014/0197304;
U.S. Patent Application Publication No. 2014/0214631;
U.S. Patent Application Publication No. 2014/0217166;
U.S. Patent Application Publication No. 2014/0217180;
U.S. Patent Application Publication No. 2014/0231500;
U.S. Patent Application Publication No. 2014/0232930;
U.S. Patent Application Publication No. 2014/0247315;
U.S. Patent Application Publication No. 2014/0263493;

U.S. Patent Application Publication No. 2014/0263645;
U.S. Patent Application Publication No. 2014/0267609;
U.S. Patent Application Publication No. 2014/0270196;
U.S. Patent Application Publication No. 2014/0270229;
U.S. Patent Application Publication No. 2014/0278387;
U.S. Patent Application Publication No. 2014/0278391;
U.S. Patent Application Publication No. 2014/0282210;
U.S. Patent Application Publication No. 2014/0284384;
U.S. Patent Application Publication No. 2014/0288933;
U.S. Patent Application Publication No. 2014/0297058;
U.S. Patent Application Publication No. 2014/0299665;
U.S. Patent Application Publication No. 2014/0312121;
U.S. Patent Application Publication No. 2014/0319220;
U.S. Patent Application Publication No. 2014/0319221;
U.S. Patent Application Publication No. 2014/0326787;
U.S. Patent Application Publication No. 2014/0332590;
U.S. Patent Application Publication No. 2014/0344943;
U.S. Patent Application Publication No. 2014/0346233;
U.S. Patent Application Publication No. 2014/0351317;
U.S. Patent Application Publication No. 2014/0353373;
U.S. Patent Application Publication No. 2014/0361073;
U.S. Patent Application Publication No. 2014/0361082;
U.S. Patent Application Publication No. 2014/0362184;
U.S. Patent Application Publication No. 2014/0363015;
U.S. Patent Application Publication No. 2014/0369511;
U.S. Patent Application Publication No. 2014/0374483;
U.S. Patent Application Publication No. 2014/0374485;
U.S. Patent Application Publication No. 2015/0001301;
U.S. Patent Application Publication No. 2015/0001304;
U.S. Patent Application Publication No. 2015/0003673;
U.S. Patent Application Publication No. 2015/0009338;
U.S. Patent Application Publication No. 2015/0009610;
U.S. Patent Application Publication No. 2015/0014416;
U.S. Patent Application Publication No. 2015/0021397;
U.S. Patent Application Publication No. 2015/0028102;
U.S. Patent Application Publication No. 2015/0028103;
U.S. Patent Application Publication No. 2015/0028104;
U.S. Patent Application Publication No. 2015/0029002;
U.S. Patent Application Publication No. 2015/0032709;
U.S. Patent Application Publication No. 2015/0039309;
U.S. Patent Application Publication No. 2015/0039878;
U.S. Patent Application Publication No. 2015/0040378;
U.S. Patent Application Publication No. 2015/0048168;
U.S. Patent Application Publication No. 2015/0049347;
U.S. Patent Application Publication No. 2015/0051992;
U.S. Patent Application Publication No. 2015/0053766;
U.S. Patent Application Publication No. 2015/0053768;
U.S. Patent Application Publication No. 2015/0053769;
U.S. Patent Application Publication No. 2015/0060544;
U.S. Patent Application Publication No. 2015/0062366;
U.S. Patent Application Publication No. 2015/0063215;
U.S. Patent Application Publication No. 2015/0063676;
U.S. Patent Application Publication No. 2015/0069130;
U.S. Patent Application Publication No. 2015/0071819;
U.S. Patent Application Publication No. 2015/0083800;
U.S. Patent Application Publication No. 2015/0086114;
U.S. Patent Application Publication No. 2015/0088522;
U.S. Patent Application Publication No. 2015/0096872;

U.S. Patent Application Publication No. 2015/0099557;
U.S. Patent Application Publication No. 2015/0100196;
U.S. Patent Application Publication No. 2015/0102109;
U.S. Patent Application Publication No. 2015/0115035;
U.S. Patent Application Publication No. 2015/0127791;
U.S. Patent Application Publication No. 2015/0128116;
U.S. Patent Application Publication No. 2015/0129659;
U.S. Patent Application Publication No. 2015/0133047;
U.S. Patent Application Publication No. 2015/0134470;
U.S. Patent Application Publication No. 2015/0136851;
U.S. Patent Application Publication No. 2015/0136854;
U.S. Patent Application Publication No. 2015/0142492;
U.S. Patent Application Publication No. 2015/0144692;
U.S. Patent Application Publication No. 2015/0144698;
U.S. Patent Application Publication No. 2015/0144701;
U.S. Patent Application Publication No. 2015/0149946;
U.S. Patent Application Publication No. 2015/0161429;
U.S. Patent Application Publication No. 2015/0169925;
U.S. Patent Application Publication No. 2015/0169929;
U.S. Patent Application Publication No. 2015/0178523;
U.S. Patent Application Publication No. 2015/0178534;
U.S. Patent Application Publication No. 2015/0178535;
U.S. Patent Application Publication No. 2015/0178536;
U.S. Patent Application Publication No. 2015/0178537;
U.S. Patent Application Publication No. 2015/0181093;
U.S. Patent Application Publication No. 2015/0181109;
U.S. Patent Application No. 13/367,978 for a *Laser Scanning Module Employing an Elastomeric U-Hinge Based Laser Scanning Assembly,* filed February 7, 2012 (Feng *et al.*);
U.S. Patent Application No. 29/458,405 for an *Electronic Device,* filed June 19, 2013 (Fitch *et al.*);
U.S. Patent Application No. 29/459,620 for an *Electronic Device Enclosure,* filed July 2, 2013 (London *et al.*);
U.S. Patent Application No. 29/468,118 for an *Electronic Device Case,* filed September 26, 2013 (Oberpriller *et al.*);
U.S. Patent Application No. 14/150,393 for *Indicia-reader Having Unitary Construction Scanner,* filed January 8, 2014 (Colavito *et al.*);
U.S. Patent Application No. 14/200,405 for *Indicia Reader for Size-Limited Applications* filed March 7, 2014 (Feng *et al.*);
U.S. Patent Application No. 14/231,898 for *Hand-Mounted Indicia-Reading Device with Finger Motion Triggering* filed April 1, 2014 (Van Horn *et al.*);
U.S. Patent Application No. 29/486,759 for an Imaging Terminal, filed April 2, 2014 (Oberpriller et al.);
U.S. Patent Application No. 14/257,364 for *Docking System and Method Using Near Field Communication* filed April 21, 2014 (Showering);
U.S. Patent Application No. 14/264,173 for *Autofocus Lens System for Indicia Readers* filed April 29, 2014 (Ackley *et al.*);
U.S. Patent Application No. 14/277,337 *for MULTIPURPOSE OPTICAL READER, filed May 14, 2014 (Jovanovski* et *al.);*
U.S. Patent Application No. 14/283,282 *for TERMINAL HAVING ILLUMINATION AND FOCUS CONTROL filed May 21, 2014 (Liu et al.);*
U.S. Patent Application No. 14/327,827 for a MOBILE-PHONE ADAPTER FOR ELECTRONIC TRANSACTIONS, filed July 10, 2014 (Hejl) ;
U.S. Patent Application No. 14/334,934 for a SYSTEM AND METHOD FOR INDICIA VERIFICATION, filed July 18, 2014 (Hejl);
U.S. Patent Application No. 14/339,708 for LASER SCANNING CODE SYMBOL READING SYSTEM, filed July 24, 2014 (Xian et al.);
U.S. Patent Application No. 14/340,627 for an AXIALLY REINFORCED FLEXIBLE SCAN ELEMENT, filed July 25, 2014 (Rueblinger et al.);
U.S. Patent Application No. 14/446,391 for MULTIFUNCTION POINT OF SALE APPARATUS WITH OPTICAL SIGNATURE CAPTURE filed July 30, 2014 (Good et al.);
U.S. Patent Application No. 14/452,697 for INTERACTIVE INDICIA READER, filed August 6, 2014 (Todeschini);
U.S. Patent Application No. 14/453,019 for DIMENSIONING SYSTEM WITH GUIDED ALIGNMENT, filed August 6, 2014 (Li et al.);

U.S. Patent Application No. 14/462,801 for MOBILE COMPUTING DEVICE WITH DATA COGNITION SOFTWARE, filed on August 19, 2014 (Todeschini et al.);

U.S. Patent Application No. 14/483,056 for VARIABLE DEPTH OF FIELD BARCODE SCANNER filed Sep. 10, 2014 (McCloskey et al.);

U.S. Patent Application No. 14/513,808 for IDENTIFYING INVENTORY ITEMS IN A STORAGE FACILITY filed Oct. 14, 2014 (Singel et al.);

U.S. Patent Application No. 14/519,195 for HANDHELD DIMENSIONING SYSTEM WITH FEEDBACK filed Oct. 21, 2014 (Laffargue et al.);

U.S. Patent Application No. 14/519,179 for DIMENSIONING SYSTEM WITH MULTIPATH INTERFERENCE MITIGATION filed Oct. 21, 2014 (Thuries et al.);

U.S. Patent Application No. 14/519,211 for SYSTEM AND METHOD FOR DIMENSIONING filed Oct. 21, 2014 (Ackley et al.);

U.S. Patent Application No. 14/519,233 for HANDHELD DIMENSIONER WITH DATA-QUALITY INDICATION filed Oct. 21, 2014 (Laffargue et al.);

U.S. Patent Application No. 14/519,249 for HANDHELD DIMENSIONING SYSTEM WITH MEASUREMENT-CONFORMANCE FEEDBACK filed Oct. 21, 2014 (Ackley et al.);

U.S. Patent Application No. 14/527,191 for METHOD AND SYSTEM FOR RECOGNIZING SPEECH USING WILDCARDS IN AN EXPECTED RESPONSE filed Oct. 29, 2014 (Braho et al.);

U.S. Patent Application No. 14/529,563 for ADAPTABLE INTERFACE FOR A MOBILE COMPUTING DEVICE filed Oct. 31, 2014 (Schoon et al.);

U.S. Patent Application No. 14/529,857 for BARCODE READER WITH SECURITY FEATURES filed October 31, 2014 (Todeschini et al.);

U.S. Patent Application No. 14/398,542 for PORTABLE ELECTRONIC DEVICES HAVING A SEPARATE LOCATION TRIGGER UNIT FOR USE IN CONTROLLING AN APPLICATION UNIT filed November 3, 2014 (Bian et al.);

U.S. Patent Application No. 14/531,154 for DIRECTING AN INSPECTOR THROUGH AN INSPECTION filed Nov. 3, 2014 (Miller et al.);

U.S. Patent Application No. 14/533,319 for BARCODE SCANNING SYSTEM USING WEARABLE DEVICE WITH EMBEDDED CAMERA filed Nov. 5, 2014 (Todeschini);

U.S. Patent Application No. 14/535,764 for CONCATENATED EXPECTED RESPONSES FOR SPEECH RECOGNITION filed Nov. 7, 2014 (Braho et al.);

U.S. Patent Application No. 14/568,305 for AUTO-CONTRAST VIEWFINDER FOR AN INDICIA READER filed Dec. 12, 2014 (Todeschini);

U.S. Patent Application No. 14/573,022 for DYNAMIC DIAGNOSTIC INDICATOR GENERATION filed Dec. 17, 2014 (Goldsmith);

U.S. Patent Application No. 14/578,627 for SAFETY SYSTEM AND METHOD filed Dec. 22, 2014 (Ackley et al.);

U.S. Patent Application No. 14/580,262 for MEDIA GATE FOR THERMAL TRANSFER PRINTERS filed Dec. 23, 2014 (Bowles);

U.S. Patent Application No. 14/590,024 for SHELVING AND PACKAGE LOCATING SYSTEMS FOR DELIVERY VEHICLES filed January 6, 2015 (Payne);

U.S. Patent Application No. 14/596,757 for SYSTEM AND METHOD FOR DETECTING BARCODE PRINTING ERRORS filed Jan. 14, 2015 (Ackley);

U.S. Patent Application No. 14/416,147 for OPTICAL READING APPARATUS HAVING VARIABLE SETTINGS filed January 21, 2015 (Chen et al.);

U.S. Patent Application No. 14/614,706 for DEVICE FOR SUPPORTING AN ELECTRONIC TOOL ON A USER'S HAND filed Feb. 5, 2015 (Oberpriller et al.);

U.S. Patent Application No. 14/614,796 for CARGO APPORTIONMENT TECHNIQUES filed Feb. 5, 2015 (Morton et al.);

U.S. Patent Application No. 29/516,892 for TABLE COMPUTER filed Feb. 6, 2015 (Bidwell et al.);

U.S. Patent Application No. 14/619,093 for METHODS FOR TRAINING A SPEECH RECOGNITION SYSTEM filed Feb. 11, 2015 (Pecorari);

U.S. Patent Application No. 14/628,708 for DEVICE, SYSTEM, AND METHOD FOR DETERMINING THE STATUS OF CHECKOUT LANES filed Feb. 23, 2015 (Todeschini);

U.S. Patent Application No. 14/630,841 for TERMINAL INCLUDING IMAGING ASSEMBLY filed Feb. 25, 2015 (Gomez et al.);

U.S. Patent Application No. 14/635,346 for SYSTEM AND METHOD FOR RELIABLE STORE-AND-FORWARD DATA HANDLING BY ENCODED INFORMATION READING TERMINALS filed March 2, 2015 (Sevier);

U.S. Patent Application No. 29/519,017 for SCANNER filed March 2, 2015 (Zhou et al.);

U.S. Patent Application No. 14/405,278 for DESIGN PATTERN FOR SECURE STORE filed March 9, 2015 (Zhu et al.);

U.S. Patent Application No. 14/660,970 for DECODABLE INDICIA READING TERMINAL WITH COMBINED ILLUMINATION filed March 18, 2015 (Kearney et al.);

U.S. Patent Application No. 14/661,013 for REPROGRAMMING SYSTEM AND METHOD FOR DEVICES INCLUDING PROGRAMMING SYMBOL filed March 18, 2015 (Soule et al.);

U.S. Patent Application No. 14/662,922 for MULTIFUNCTION POINT OF SALE SYSTEM filed March 19, 2015 (Van Horn et al.);

U.S. Patent Application No. 14/663,638 for VEHICLE MOUNT COMPUTER WITH CONFIGURABLE IGNITION SWITCH BEHAVIOR filed March 20, 2015 (Davis et al.);

U.S. Patent Application No. 14/664,063 for METHOD AND APPLICATION FOR SCANNING A BARCODE WITH A SMART DEVICE WHILE CONTINUOUSLY RUNNING AND DISPLAYING AN APPLICATION ON THE SMART DEVICE DISPLAY filed March 20, 2015 (Todeschini);

U.S. Patent Application No. 14/669,280 for TRANSFORMING COMPONENTS OF A WEB PAGE TO VOICE PROMPTS filed March 26, 2015 (Funyak et al.);

U.S. Patent Application No. 14/674,329 for AIMER FOR BARCODE SCANNING filed March 31, 2015 (Bidwell);

U.S. Patent Application No. 14/676,109 for INDICIA READER filed April 1, 2015 (Huck);

U.S. Patent Application No. 14/676,327 for DEVICE MANAGEMENT PROXY FOR SECURE DEVICES filed April 1, 2015 (Yeakley et al.);

U.S. Patent Application No. 14/676,898 for NAVIGATION SYSTEM CONFIGURED TO INTEGRATE MOTION SENSING DEVICE INPUTS filed April 2, 2015 (Showering);

U.S. Patent Application No. 14/679,275 for DIMENSIONING SYSTEM CALIBRATION SYSTEMS AND METHODS filed April 6, 2015 (Laffargue et al.);

U.S. Patent Application No. 29/523,098 for HANDLE FOR A TABLET COMPUTER filed April 7, 2015 (Bidwell et al.);

U.S. Patent Application No. 14/682,615 for SYSTEM AND METHOD FOR POWER MANAGEMENT OF MOBILE DEVICES filed April 9, 2015 (Murawski et al.);

U.S. Patent Application No. 14/686,822 for MULTIPLE PLATFORM SUPPORT SYSTEM AND METHOD filed April 15, 2015 (Qu et al.);

U.S. Patent Application No. 14/687,289 for SYSTEM FOR COMMUNICATION VIA A PERIPHERAL HUB filed April 15, 2015 (Kohtz et al.);

U.S. Patent Application No. 29/524,186 for SCANNER filed April 17, 2015 (Zhou et al.);

U.S. Patent Application No. 14/695,364 for MEDICATION MANAGEMENT SYSTEM filed April 24, 2015 (Sewell et al.);

U.S. Patent Application No. 14/695,923 for SECURE UNATTENDED NETWORK AUTHENTICATION filed April 24, 2015 (Kubler et al.);

U.S. Patent Application No. 29/525,068 for TABLET COMPUTER WITH REMOVABLE SCANNING DEVICE filed April 27, 2015 (Schulte et al.);

U.S. Patent Application No. 14/699,436 for SYMBOL READING SYSTEM HAVING PREDICTIVE DIAGNOSTICS filed April 29, 2015 (Nahill et al.);

U.S. Patent Application No. 14/702,110 for SYSTEM AND METHOD FOR REGULATING BARCODE DATA INJECTION INTO A RUNNING APPLICATION ON A SMART DEVICE filed May 1, 2015 (Todeschini et al.);

U.S. Patent Application No. 14/702,979 for TRACKING BATTERY CONDITIONS filed May 4, 2015 (Young et al.);

U.S. Patent Application No. 14/704,050 for INTERMEDIATE LINEAR POSITIONING filed May 5, 2015 (Charpentier et al.);

U.S. Patent Application No. 14/705,012 for HANDS-FREE HUMAN MACHINE INTERFACE RESPONSIVE TO A DRIVER OF A VEHICLE filed May 6, 2015 (Fitch et al.);

U.S. Patent Application No. 14/705,407 for METHOD AND SYSTEM TO PROTECT SOFTWARE-BASED NETWORK-CONNECTED DEVICES FROM ADVANCED PERSISTENT THREAT filed May 6, 2015 (Hussey et al.);

U.S. Patent Application No. 14/707,037 for SYSTEM AND METHOD FOR DISPLAY OF INFORMATION USING A VEHICLE-MOUNT COMPUTER filed May 8, 2015 (Chamberlin);

U.S. Patent Application No. 14/707,123 for APPLICATION INDEPENDENT DEX/UCS INTERFACE filed May 8, 2015 (Pape);

U.S. Patent Application No. 14/707,492 for METHOD AND APPARATUS FOR READING OPTICAL INDICIA USING A PLURALITY OF DATA SOURCES filed May 8, 2015 (Smith et al.);

U.S. Patent Application No. 14/710,666 for PRE-PAID USAGE SYSTEM FOR ENCODED INFORMATION READING TERMINALS filed May 13, 2015 (Smith);

U.S. Patent Application No. 29/526,918 for CHARGING BASE filed May 14, 2015 (Fitch et al.);

U.S. Patent Application No. 14/715,672 for AUGUMENTED REALITY ENABLED HAZARD DISPLAY filed May 19, 2015 (Venkatesha et al.);
U.S. Patent Application No. 14/715,916 for EVALUATING IMAGE VALUES filed May 19, 2015 (Ackley);
U.S. Patent Application No. 14/722,608 for INTERACTIVE USER INTERFACE FOR CAPTURING A DOCUMENT IN AN IMAGE SIGNAL filed May 27, 2015 (Showering et al.);
U.S. Patent Application No. 29/528,165 for IN-COUNTER BARCODE SCANNER filed May 27, 2015 (Oberpriller et al.);
U.S. Patent Application No. 14/724,134 for ELECTRONIC DEVICE WITH WIRELESS PATH SELECTION CAPABILITY filed May 28, 2015 (Wang et al.);
U.S. Patent Application No. 14/724,849 for METHOD OF PROGRAMMING THE DEFAULT CABLE INTERFACE SOFTWARE IN AN INDICIA READING DEVICE filed May 29, 2015 (Barten);
U.S. Patent Application No. 14/724,908 for IMAGING APPARATUS HAVING IMAGING ASSEMBLY filed May 29, 2015 (Barber et al.);
U.S. Patent Application No. 14/725,352 for APPARATUS AND METHODS FOR MONITORING ONE OR MORE PORTABLE DATA TERMINALS (Caballero et al.);
U.S. Patent Application No. 29/528,590 for ELECTRONIC DEVICE filed May 29, 2015 (Fitch et al.);
U.S. Patent Application No. 29/528,890 for MOBILE COMPUTER HOUSING filed June 2, 2015 (Fitch et al.);
U.S. Patent Application No. 14/728,397 for DEVICE MANAGEMENT USING VIRTUAL INTERFACES CROSS-REFERENCE TO RELATED APPLICATIONS filed June 2, 2015 (Caballero);
U.S. Patent Application No. 14/732,870 for DATA COLLECTION MODULE AND SYSTEM filed June 8, 2015 (Powilleit);
U.S. Patent Application No. 29/529,441 for INDICIA READING DEVICE filed June 8, 2015 (Zhou et al.);
U.S. Patent Application No. 14/735,717 for INDICIA-READING SYSTEMS HAVING AN INTERFACE WITH A USER'S NERVOUS SYSTEM filed June 10, 2015 (Todeschini);
U.S. Patent Application No. 14/738,038 for METHOD OF AND SYSTEM FOR DETECTING OBJECT WEIGHING INTERFERENCES filed June 12, 2015 (Amundsen et al.);
U.S. Patent Application No. 14/740,320 for TACTILE SWITCH FOR A MOBILE ELECTRONIC DEVICE filed June 16, 2015 (Bandringa);
U.S. Patent Application No. 14/740,373 for CALIBRATING A VOLUME DIMENSIONER filed June 16, 2015 (Ackley et al.);
U.S. Patent Application No. 14/742,818 for INDICIA READING SYSTEM EMPLOYING DIGITAL GAIN CONTROL filed June 18, 2015 (Xian et al.);
U.S. Patent Application No. 14/743,257 for WIRELESS MESH POINT PORTABLE DATA TERMINAL filed June 18, 2015 (Wang et al.);
U.S. Patent Application No. 29/530,600 for CYCLONE filed June 18, 2015 (Vargo et al);
U.S. Patent Application No. 14/744,633 for IMAGING APPARATUS COMPRISING IMAGE SENSOR ARRAY HAVING SHARED GLOBAL SHUTTER CIRCUITRY filed June 19, 2015 (Wang);
U.S. Patent Application No. 14/744,836 for CLOUD-BASED SYSTEM FOR READING OF DECODABLE INDICIA filed June 19, 2015 (Todeschini et al.);
U.S. Patent Application No. 14/745,006 for SELECTIVE OUTPUT OF DECODED MESSAGE DATA filed June 19, 2015 (Todeschini et al.);
U.S. Patent Application No. 14/747,197 for OPTICAL PATTERN PROJECTOR filed June 23, 2015 (Thuries et al.);
U.S. Patent Application No. 14/747,490 for DUAL-PROJECTOR THREE-DIMENSIONAL SCANNER filed June 23, 2015 (Jovanovski et al.); and
U.S. Patent Application No. 14/748,446 for CORDLESS INDICIA READER WITH A MULTIFUNCTION COIL FOR WIRELESS CHARGING AND EAS DEACTIVATION, filed June 24, 2015 (Xie et al.).

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

**Claims**

1. A worker resource management system, comprising:

   a voice-directed mobile terminal for facilitating a dialog between a user and the voice-directed mobile terminal;

and
a computer in communication with the voice-directed mobile terminal, the computer including a worker resource analysis module;
wherein the worker resource analysis module is configured to (i) receive user activity information from the voice-directed mobile terminal and (ii) identify user productivity patterns based at least in part upon the user activity information.

2. The system of claim 1, comprising a visual display in communication with the computer.

3. The system of claim 2, wherein the visual display provides reports corresponding to user productivity patterns.

4. The system of claim 2, wherein the visual display provides alerts corresponding to user productivity patterns.

5. The system of claim 1, wherein the worker resource analysis module is configured to classify user activity information into groups comprising user workflow tasks, user sign-in activity, user sign-out activity, user break activity, and/or user region changes.

6. The system of claim 1, wherein the user productivity patterns comprise user break duration, user idle time after sign-in, user idle time before sign-off, user idle time before beginning break activity, and/or user idle time after returning from break activity.

7. The system of claim 1, wherein the user productivity patterns are identified at fixed interval time periods immediately preceding a current identification time.

8. The system of claim 7, wherein the user productivity patterns identified are based on 24-hour time periods immediately preceding the current identification time.

9. The system of claim 7, wherein the user productivity patterns identified are based on five minute time periods immediately preceding the current identification time.

10. The system of claim 7, wherein the user productivity patterns identified are flagged based upon the most recent interval period immediately preceding the current identification time.

11. A method for managing worker resources, comprising:

transmitting task data from a server computer to a voice-directed mobile terminal in communication with the server;
providing speech-based instructions associated with the task data to a user using the voice-directed mobile terminal;
receiving user activity information from the voice-directed mobile terminal;
analyzing user activity information to (i) identify user productivity patterns, or (ii) provide work assessment predictions; and
implementing worker resource decisions in response to the user activity information analysis.

12. The method of claim 11, wherein the user productivity patterns comprise user break duration, user idle time after sign-in, user idle time after sign-off, user idle time before beginning break activity, and/or user idle time after returning from break activity.

13. The method of claim 12, wherein the worker resource decisions comprise providing a productivity compliance alert to a worker based upon break duration compliance.

14. The method of claim 11, wherein the worker resource decisions comprise transferring a worker to a second work region from a first work region.

FIG. 1

*FIG. 2*

FIG. *3*

FIG. 4

Europäisches
Patentamt

European
Patent Office

Office européen
des brevets

## EUROPEAN SEARCH REPORT

Application Number

EP 15 18 9657

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/080930 A1 (LOGAN JAMES R [US] ET AL) 12 April 2007 (2007-04-12) * paragraph [0001] - paragraph [0005] * * paragraph [0021] - paragraph [0028] * * paragraph [0086] * ----- | 1-14 | INV. G06Q10/06 |
| A | US 2012/253548 A1 (DAVIDSON MARK J [US]) 4 October 2012 (2012-10-04) * paragraph [0160] - paragraph [0180]; figures 10, 11 * ----- | 1-14 | |

TECHNICAL FIELDS
SEARCHED      (IPC)

G06Q

The present search report has been drawn up for all claims

| Place of search | Date of completion of the search | Examiner |
|---|---|---|
| Munich | 28 January 2016 | Hasubek, Bodo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................
& : member of the same patent family, corresponding
document

EPO FORM 1503 03.82 (P04C01)

EP 3 009 968 A1

## ANNEX TO THE EUROPEAN SEARCH REPORT
## ON EUROPEAN PATENT APPLICATION NO.

EP 15 18 9657

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2016

| Patent document cited in search report | | Publication date | Patent family member(s) | | Publication date |
|---|---|---|---|---|---|
| US 2007080930 | A1 | 12-04-2007 | EP | 1934972 A1 | 25-06-2008 |
| | | | EP | 2479749 A2 | 25-07-2012 |
| | | | EP | 2487679 A2 | 15-08-2012 |
| | | | US | 2007080930 A1 | 12-04-2007 |
| | | | WO | 2007044755 A1 | 19-04-2007 |
| US 2012253548 | A1 | 04-10-2012 | CA | 2831712 A1 | 04-10-2012 |
| | | | CN | 103827925 A | 28-05-2014 |
| | | | EP | 2810254 A2 | 10-12-2014 |
| | | | US | 2012253548 A1 | 04-10-2012 |
| | | | US | 2012253587 A1 | 04-10-2012 |
| | | | US | 2012253632 A1 | 04-10-2012 |
| | | | US | 2012253861 A1 | 04-10-2012 |
| | | | US | 2012253862 A1 | 04-10-2012 |
| | | | US | 2012253867 A1 | 04-10-2012 |
| | | | US | 2012253888 A1 | 04-10-2012 |
| | | | US | 2012253889 A1 | 04-10-2012 |
| | | | US | 2012253892 A1 | 04-10-2012 |
| | | | US | 2014188533 A1 | 03-07-2014 |
| | | | US | 2015161828 A1 | 11-06-2015 |
| | | | US | 2015206356 A1 | 23-07-2015 |
| | | | WO | 2012135472 A2 | 04-10-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 2944DEL2014
- US 6832725 B
- US 7128266 B
- US 7159783 B
- US 7413127 B
- US 7726575 B
- US 8294969 B
- US 8317105 B
- US 8322622 B
- US 8366005 B
- US 8371507 B
- US 8376233 B
- US 8381979 B
- US 8390909 B
- US 8408464 B
- US 8408468 B
- US 8408469 B
- US 8424768 B
- US 8448863 B
- US 8457013 B
- US 8459557 B
- US 8469272 B
- US 8474712 B
- US 8479992 B
- US 8490877 B
- US 8517271 B
- US 8523076 B
- US 8528818 B
- US 8544737 B
- US 8548242 B
- US 8548420 B
- US 8550335 B
- US 8550354 B
- US 8550357 B
- US 8556174 B
- US 8556176 B
- US 8556177 B
- US 8559767 B
- US 8599957 B
- US 8561895 B
- US 8561903 B
- US 8561905 B
- US 8565107 B
- US 8571307 B
- US 8579200 B
- US 8583924 B
- US 8584945 B
- US 8587595 B
- US 8587697 B
- US 8588869 B
- US 8590789 B
- US 8596539 B
- US 8596542 B
- US 8596543 B
- US 8599271 B
- US 8600158 B
- US 8600167 B
- US 8602309 B
- US 8608053 B
- US 8608071 B
- US 8611309 B
- US 8615487 B
- US 8616454 B
- US 8621123 B
- US 8622303 B
- US 8628013 B
- US 8628015 B
- US 8628016 B
- US 8629926 B
- US 8630491 B
- US 8635309 B
- US 8636200 B
- US 8636212 B
- US 8636215 B
- US 8636224 B
- US 8638806 B
- US 8640958 B
- US 8640960 B
- US 8643717 B
- US 8646692 B
- US 8646694 B
- US 8657200 B
- US 8659397 B
- US 8668149 B
- US 8678285 B
- US 8678286 B
- US 8682077 B
- US 8687282 B
- US 8692927 B
- US 8695880 B
- US 8698949 B
- US 8717494 B
- US 8720783 B
- US 8723804 B
- US 8723904 B
- US 8727223 B
- US D702237 S
- US 8740082 B

- US 8740085 B
- US 8746563 B
- US 8750445 B
- US 8752766 B
- US 8756059 B
- US 8757495 B
- US 8760563 B
- US 8763909 B
- US 8777108 B
- US 8777109 B
- US 8779898 B
- US 8781520 B
- US 8783573 B
- US 8789757 B
- US 8789758 B
- US 8789759 B
- US 8794520 B
- US 8794522 B
- US 8794525 B
- US 8794526 B
- US 8798367 B
- US 8807431 B
- US 8807432 B
- US 8820630 B
- US 8822848 B
- US 8824692 B
- US 8824696 B
- US 8842849 B
- US 8844822 B
- US 8844823 B
- US 8849019 B
- US 8851383 B
- US 8854633 B
- US 8866963 B
- US 8868421 B
- US 8868519 B
- US 8868802 B
- US 8868803 B
- US 8870074 B
- US 8879639 B
- US 8880426 B
- US 8881983 B
- US 8881987 B
- US 8903172 B
- US 8908995 B
- US 8910870 B
- US 8910875 B
- US 8914290 B
- US 8914788 B
- US 8915439 B
- US 8915444 B
- US 8916789 B
- US 8918250 B
- US 8918564 B
- US 8925818 B
- US 8939374 B
- US 8942480 B
- US 8944313 B

- US 8944327 B
- US 8944332 B
- US 8950678 B
- US 8967468 B
- US 8971346 B
- US 8976030 B
- US 8976368 B
- US 8978981 B
- US 8978983 B
- US 8978984 B
- US 8985456 B
- US 8985457 B
- US 8985459 B
- US 8985461 B
- US 8988578 B
- US 8988590 B
- US 8991704 B
- US 8996194 B
- US 8996384 B
- US 9002641 B
- US 9007368 B
- US 9010641 B
- US 9015513 B
- US 9016576 B
- US 9022288 B
- US 9030964 B
- US 9033240 B
- US 9033242 B
- US 9036054 B
- US 9037344 B
- US 9038911 B
- US 9038915 B
- US 9047098 B
- US 9047359 B
- US 9047420 B
- US 9047525 B
- US 9047531 B
- US 9053055 B
- US 9053378 B
- US 9053380 B
- US 9058526 B
- US 9064165 B
- US 9064167 B
- US 9064168 B
- US 9064254 B
- US 9066032 B
- US 9070032 B
- US D716285 S
- US D723560 S
- US D730357 S
- US D730901 S
- US D730902 S
- US D733112 S
- US D734339 S
- US 2013163789 A
- US 2013173985 A
- US 2014019130 A
- US 2014110495 A

- US 20080185432 A
- US 20090134221 A
- US 20100177080 A
- US 20100177076 A
- US 20100177707 A
- US 20100177749 A
- US 20100265880 A
- US 20110202554 A
- US 20120111946 A
- US 20120168511 A
- US 20120168512 A
- US 20120193423 A
- US 20120203647 A
- US 20120223141 A
- US 20120228382 A
- US 20120248188 A
- US 20130043312 A
- US 20130082104 A
- US 20130175341 A
- US 20130175343 A
- US 20130257744 A
- US 20130257759 A
- US 20130270346 A
- US 20130287258 A
- US 20130292475 A
- US 20130292477 A
- US 20130293539 A
- US 20130293540 A
- US 20130306728 A
- US 20130306731 A
- US 20130307964 A
- US 20130308625 A
- US 20130313324 A
- US 20130313325 A
- US 20130342717 A
- US 20140001267 A
- US 20140008439 A
- US 20140025584 A
- US 20140034734 A
- US 20140036848 A
- US 20140039693 A
- US 20140042814 A
- US 20140049120 A
- US 20140049635 A
- US 20140061306 A
- US 20140063289 A
- US 20140066136 A
- US 20140067692 A
- US 20140070005 A
- US 20140071840 A
- US 20140074746 A
- US 20140076974 A
- US 20140078341 A
- US 20140078345 A
- US 20140097249 A
- US 20140098792 A
- US 20140100813 A
- US 20140103115 A

- US 20140104413 A
- US 20140104414 A
- US 20140104416 A
- US 20140104451 A
- US 20140106594 A
- US 20140106725 A
- US 20140108010 A
- US 20140108402 A
- US 20140110485 A
- US 20140114530 A
- US 20140124577 A
- US 20140124579 A
- US 20140125842 A
- US 20140125853 A
- US 20140125999 A
- US 20140129378 A
- US 20140131438 A
- US 20140131441 A
- US 20140131443 A
- US 20140131444 A
- US 20140131445 A
- US 20140131448 A
- US 20140133379 A
- US 20140136208 A
- US 20140140585 A
- US 20140151453 A
- US 20140152882 A
- US 20140158770 A
- US 20140159869 A
- US 20140166755 A
- US 20140166759 A
- US 20140168787 A
- US 20140175165 A
- US 20140175172 A
- US 20140191644 A
- US 20140191913 A
- US 20140197238 A
- US 20140197239 A
- US 20140197304 A
- US 20140214631 A
- US 20140217166 A
- US 20140217180 A
- US 20140231500 A
- US 20140232930 A
- US 20140247315 A
- US 20140263493 A
- US 20140263645 A
- US 20140267609 A
- US 20140270196 A
- US 20140270229 A
- US 20140278387 A
- US 20140278391 A
- US 20140282210 A
- US 20140284384 A
- US 20140288933 A
- US 20140297058 A
- US 20140299665 A
- US 20140312121 A

- US 20140319220 A
- US 20140319221 A
- US 20140326787 A
- US 20140332590 A
- US 20140344943 A
- US 20140346233 A
- US 20140351317 A
- US 20140353373 A
- US 20140361073 A
- US 20140361082 A
- US 20140362184 A
- US 20140363015 A
- US 20140369511 A
- US 20140374483 A
- US 20140374485 A
- US 20150001301 A
- US 20150001304 A
- US 20150003673 A
- US 20150009338 A
- US 20150009610 A
- US 20150014416 A
- US 20150021397 A
- US 20150028102 A
- US 20150028103 A
- US 20150028104 A
- US 20150029002 A
- US 20150032709 A
- US 20150039309 A
- US 20150039878 A
- US 20150040378 A
- US 20150048168 A
- US 20150049347 A
- US 20150051992 A
- US 20150053766 A
- US 20150053768 A
- US 20150053769 A
- US 20150060544 A
- US 20150062366 A
- US 20150063215 A
- US 20150063676 A
- US 20150069130 A
- US 20150071819 A
- US 20150083800 A
- US 20150086114 A
- US 20150088522 A
- US 20150096872 A
- US 20150099557 A
- US 20150100196 A
- US 20150102109 A
- US 20150115035 A
- US 20150127791 A
- US 20150128116 A
- US 20150129659 A
- US 20150133047 A
- US 20150134470 A
- US 20150136851 A
- US 20150136854 A
- US 20150142492 A

- US 20150144692 A
- US 20150144698 A
- US 20150144701 A
- US 20150149946 A
- US 20150161429 A
- US 20150169925 A
- US 20150169929 A
- US 20150178523 A
- US 20150178534 A
- US 20150178535 A
- US 20150178536 A
- US 20150178537 A
- US 20150181093 A
- US 20150181109 A
- US 36797812 A
- US 45840513 F
- US 45962013 F
- US 46811813 F
- US 15039314 A
- US 20040514 A
- US 23189814 A
- US 48675914 F
- US 25736414 A
- US 26417314 A
- US 27733714 A
- US 28328214 A
- US 32782714 A
- US 33493414 A
- US 33970814 A
- US 34062714 A
- US 44639114 A
- US 45269714 A
- US 45301914 A
- US 46280114 A
- US 48305614 A
- US 51380814 A
- US 51919514 A
- US 51917914 A
- US 51921114 A
- US 51923314 A
- US 51924914 A
- US 52719114 A
- US 52956314 A
- US 52985714 A
- US 39854214 A
- US 53115414 A
- US 53331914 A
- US 53576414 A
- US 56830514 A
- US 57302214 A
- US 57862714 A
- US 58026214 A
- US 59002415 A
- US 59675715 A
- US 41614715 A
- US 61470615 A
- US 61479615 A
- US 51689215 F

- US 61909315 A
- US 62870815 A
- US 63084115 A
- US 63534615 A
- US 51901715 F
- US 40527815 A
- US 66097015 A
- US 66101315 A
- US 66292215 A
- US 66363815 A
- US 66406315 A
- US 66928015 A
- US 67432915 A
- US 67610915 A
- US 67632715 A
- US 67689815 A
- US 67927515 A
- US 52309815 F
- US 68261515 A
- US 68682215 A
- US 68728915 A
- US 52418615 F
- US 69536415 A
- US 69592315 A
- US 52506815 F
- US 69943615 A
- US 70211015 A
- US 70297915 A
- US 70405015 A
- US 70501215 A
- US 70540715 A

- US 70703715 A
- US 70712315 A
- US 70749215 A
- US 71066615 A
- US 52691815 F
- US 71567215 A
- US 71591615 A
- US 72260815 A
- US 52816515 F
- US 72413415 A
- US 72484915 A
- US 72490815 A
- US 725352 A
- US 52859015 F
- US 52889015 F
- US 72839715 A
- US 73287015 A
- US 52944115 F
- US 73571715 A
- US 73803815 A
- US 74032015 A
- US 74037315 A
- US 74281815 A
- US 74325715 A
- US 53060015 F
- US 74463315 A
- US 74483615 A
- US 74500615 A
- US 74719715 A
- US 74749015 A
- US 74844615 A